# EUROPEAN PATENT SPECIFICATION

(11) **EP 2 196 258 B1**
(45) Date of publication and mention of the grant of the patent: **03.07.2013**
(21) Application number: 09252638.3
(22) Date of filing: 17.11.2009
(51) Int. Cl.: B01J 19/24

(54) **Reactor**
Reaktor
Réacteur

(30) Priority: 03.12.2008 JP 2008308570
(43) Date of publication of application: 16.06.2010
(73) Proprietor: NGK Insulators, Ltd., Aichi Pref. 467-8530 (JP)
(72) Inventor: Mizuno, Hiroshi, Nagoya City, Aichi-ken, 467-8530 (JP); Takahashi, Michio, Nagoya City, Aichi-ken, 467-8530 (JP)
(74) Representative: Paget, Hugh Charles Edward

(56) References cited:
- EP-A2- 1 645 316
- WO-A1-01/09031
- JP-A- 7 265 652
- US-A- 4 101 287

## Description

### Background of the Invention and Related Art Statement

The present invention relates to a reactor and, more specifically, to a reactor capable of reforming a liquid with saving energy and a space by performing evaporation and reforming of the liquid in a reformer.

In recent years, hydrogen is spotlighted as clean energy. As a process for obtaining hydrogen, a reforming reaction of hydrocarbon or the like is known. Generally, the reforming reaction of hydrocarbon or the like is performed by evaporating a reformulation raw material such as hydrocarbon with an evaporation apparatus (evaporator) to reform the reformulation raw material in a gaseous state with a reformer (see, JP-A-2003-506300).

In addition, there is disclosed a method where a liquid is reformed by discharge plasma (see, JP-A-2007-137721).

### Summary of the Invention

In the plasma converter described in JP-A-2003-506300, a fuel serving as a reformulation raw material is evaporated with an evaporator, and the fuel vapor obtained is heated with a heater, followed by being sent to a reformer to perform the reforming reaction. Thus, since the plasma converter is provided with an evaporation apparatus (evaporator and heater) besides the reactor for performing a reforming reaction, it has a problem of extra consumption of energy required for evaporation and heating. In addition, since the plasma converter is provided with an evaporator and a heater, a whole reactor becomes large to cause a problem of requiring a large space.

In addition, the reactor described in JP-A-2007-137721, which reforms a liquid fuel by discharge plasma in a liquid, has problems of requiring a tank because the fuel (isooctane, light oil, gasoline, or the like) is liquid and requiring time for maintenance and the like because it is necessary to remove the fuel from the tank. In addition, it has a problem of requiring attention to fuel leakage upon reforming.

EP 1 645 316 describes a fuel reforming apparatus with a heat exchanger. The heat exchanger can have a honeycomb structure. The heat exchanger is made of three sections, the first heat exchanger includes a stack of a plurality of gas channel members for conducting reformed gas from left to right, and a plurality of water channel members for conducting water from top to bottom. The water is heated while the reformed gas is cooled by the exchange of heat between the reformed gas from the reforming reactor and the water fed from the watertank.

The honeycomb structure of EP 1 645 316 has separate vertical and horizontal channels. The water in EP 1 645 316 is supplied into the vertical channels so that the water can be heated by the reformed gas in separate channels running from left to right.

US 4,101,287 describes a combined heat exchanger reactor with a honeycomb structure. The channels of the honeycomb are divided into separate groups with two types of fluid carrying channels: cooling channels and reactant channels. The reactant channels are in thermal contact through common walls with cooling channels and that the reactant channels are separated completely from other reactant channels by intervening voids formed by the cooling channels.

The present invention has been made in view of such problems of prior art and provides a reactor capable of reforming a liquid with saving energy and a space by performing evaporation and reforming of the liquid in a reformer.

In order to solve the aforementioned problems, the present invention provides the following reactor.

[1] A reactor comprising:
a honeycomb-structure reformer having partition walls separating and forming a plurality of cells functioning as fluid passages extending through from one end face another end face and a side face which extends from said one end face to the other end face, and further having a liquid supply hole having an opening at said side face, capable of evaporating liquid supplied inside, and capable of reforming the evaporated liquid; a liquid supply tube inserted into the liquid supply hole in order to supply liquid to the cells inside the reformer; and a heating apparatus for heating the reformer.

[2] A reactor according to [1], wherein the liquid contains hydrocarbon.

[3] A reactor according to [1] or [2], wherein the heating apparatus has a heater disposed on the side face of the reformer, and the reformer is heated by the heater to accelerate the evaporation and reforming reaction of the liquid.

[4] A reactor according to any one of [1] to [3], wherein a material for the reformer is conductive ceramic, and the heating apparatus has a linear electrode disposed on an extended line of the direction where the cells of the reformer are extended and a pulse power source capable of applying pulse voltage to a pair of electrodes with the reformer and the linear electrode being regarded as the pair of electrodes, wherein pulse voltage is applied between the pair of electrodes to generate plasma, and thereby the reactor is heated to accelerate evaporation and reforming reaction of the liquid.

[5] A reactor according to [4], wherein the conductive ceramic contains silicon carbide.

[6] A reactor according to any one of [1] to [5], wherein a catalyst for reforming is loaded on the reformer.

[7] A reactor according to [6], wherein the catalyst is a substance containing at least one element selected from the group consisting of noble metals, aluminum, nickel, zirconium, titanium, cerium, cobalt, manganese, zinc, copper, tin, iron, niobium, magnesium, lanthanum, samarium, bismuth, and barium.

A reactor according to [6], wherein the catalyst is a substance containing at least one element selected from the group consisting of platinum, rhodium, palladium, ruthenium, indium, silver, and gold.

A reactor according to any one of [4] to [8], wherein the pulse power source is a high voltage pulse power source using a static induction thyristor.

A reactor has a structure where a liquid supply hole having an opening portion is formed on a side face (side face of the reformer) of a honeycomb structured reformer, and a liquid supply tube for supplying a liquid is inserted into the liquid supply hole. Since the reactor is provided with a heating apparatus for heating the reformer, a liquid is supplied inside the reformer through the liquid supply tube in a state that the reformer is heated with a heating apparatus to be able to reform the evaporated liquid with evaporating the liquid in the reformer. Because of this structure, since it is not necessary to provide an evaporation apparatus besides the reformer, the liquid can be reformed with saving energy and a space.

### Brief Description of the Drawings

[Fig. 1] Fig. 1 is a perspective view schematically showing an embodiment of a reactor of the present invention.

[Fig. 2] Fig. 2 is a plan view of the reactor shown in Fig. 1, viewed from the heater side.

[Fig. 3] Fig. 3 is a perspective view schematically showing a liquid supply tube constituting an embodiment of a reactor of the present invention.

[Fig. 4] Fig. 4 is a perspective view schematically showing another embodiment of a reactor of the present invention.

[Fig. 5] Fig. 5 is a perspective view schematically showing still another embodiment of a reactor of the present invention.

### Reference Numerals

1: reformer, 2: cell, 3: partition wall, 4: side face, 5: opening portion, 6: liquid supply hole, 7: plugging portion, 11: liquid supply tube, 12: hollow portion, 13: liquid injection port, 21: heating apparatus, 22: heater, 23: power for heater, 31: linear electrode, 32: pulse power source, 41: reforming reactor, 42: circulation gas introduction port, 100, 200, 300: reactor

### Detailed Description of the Invention

Hereinbelow, the best mode for carrying out the present invention will specifically be described with referring to drawings. However, the present invention is by no means limited to the following embodiments, and it should be understood that changes, improvements and the like of the design may suitably be added on the basis of ordinary knowledge of a person of ordinary skill within the range of not deviating from the gist of the present invention.

### 1. Reactor:

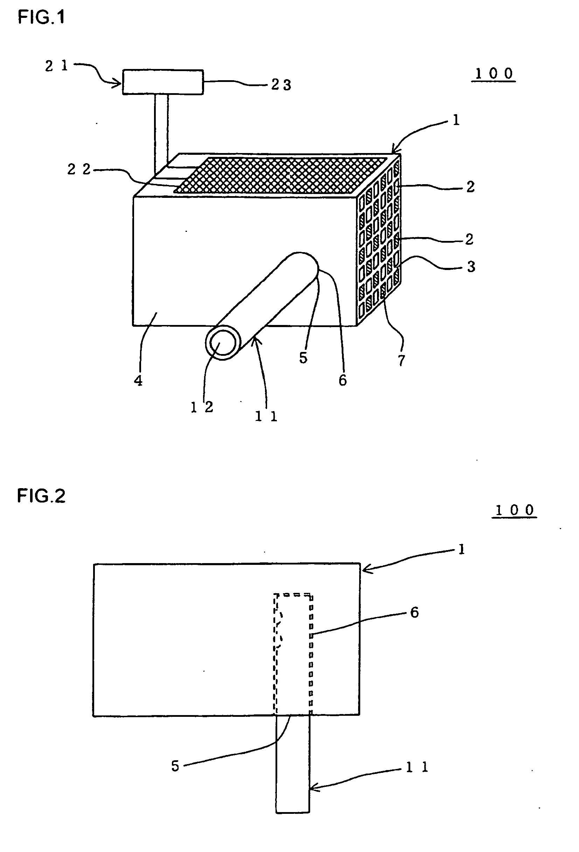

As shown in Figs. 1 and 2, a reactor 100 of the present embodiment is provided with a honeycomb-structured reformer 1 having partition walls 3 separating and forming a plurality of cells 2 functioning as fluid passages extending through from one end face to the other end face, having a liquid supply hole 6 having an opening portion 5 on a side face 4, capable of evaporating liquid supplied inside, and capable of reforming the evaporated liquid; a liquid supply tube 11 inserted into the liquid supply hole 6 in order to supply liquid to the reformer 1; and a heating apparatus 21 for heating the reformer 1. Here, Fig. 1 is a perspective view schematically shown an embodiment of the reactor 100 of the present invention. Fig. 2 is a plan view of the reactor 100 shown in Fig. 1, viewed from the heater 21 side. Incidentally, in Fig. 2, the heater 21 and the power source 22 for the heater shown in Fig. 1 are omitted.

Thus, since, in the reactor of the present embodiment, a liquid is supplied to the inside from the side face of the honeycomb structured reactor, and the reformer itself is heated by a heating apparatus, the liquid can be evaporated at the moment of supplying a liquid to the reformer, and the evaporated liquid can be reformed in the reformer. Here, to reform a liquid means to generate hydrogen by reaction of hydrocarbon or alcohol in the liquid and to obtain a mixture containing hydrogen from the liquid. Therefore, the "liquid" reformed by a reactor of the present invention contains hydrocarbon or alcohol, and it is preferable to contain hydrocarbon. In addition, as the reforming reaction, a partial oxidation reaction, a steam-reforming reaction, or the like can be employed. The partial oxidation reaction is a reaction shown by a reaction formula of "CH₄+1/2·O₂=2H₂+CO" in the case of reforming, for example, methane. In addition, the steam-reforming reaction is a reaction shown by a reaction formula of "CH₄+H₂O=3H₂+CO" in the case of reforming, for example, methane.

In a reactor 100 of the present embodiment, a reformer 1 has partition walls 3 separating and forming a plurality of cells 2 functioning as fluid passages extending through from one end face to the other end face. It is a honeycomb structure having a rectangular parallelepiped external shape. In addition, a liquid supply hole 6 having an opening portion 5 on a side face 4 is formed in the reformer 1. The side faces 4 of the reformer 1 are the outer peripheral faces other than both the end faces where opening portions of the cells are formed.

Though the external shape of the reformer is preferably rectangular parallelepiped, it may be another shape such as a polygonal columnar shape other than one having a square bottom face and a circular cylindrical shape. In addition, for a cell shape, a desired shape may suitably be selected from a circle, an ellipse, a triangle, a rectangle, and other polygons in a cross section perpendicular to the central axial direction. In the reactor 100 of the present embodiment, the cell shape is a rectangle in a cross section perpendicular to the central axial direction.

In the reactor 100 of the present embodiment, the cell density of the honeycomb structured reformer is not particularly limited and may suitably be designed in accordance with the purpose. For example, it is preferably within the range from 6 to 2000 cells/sq. in. (1.0 to 320 cells/cm²) . When the cell density is below 6 cells/sq. in., strength of the partition walls or even strength of the reformer itself becomes insufficient, and, further, the effective GSA (geometric surface area) may be insufficient. On he other hand, when the cell density is above 2000 cells/sq.in., pressure loss may increase.

In addition, the thickness of the partition walls (wall thickness) is not particularly limited and may suitably be designed in accordance with the purpose. For example, when it is used for hydrogen generation by reformation of hydrocarbon, the wall thickness is preferably 50 µm to 2 mm, more preferably 60 to 500 µm. When the wall thickness is less than 50 µm, mechanical strength is decreased, and it may become weak against thermal stress due to a shock or a temperature change. On the other hand, when it is above 2mm, the rate of the cell capacity occupying the reformer is decreased, and pressure loss may become large.

The length of the reformer (length in the direction where the cells extend (central axial direction)) is preferably 5 to 100 mm, more preferably 10 to 50 mm. When it is below 5 mm, most of the liquid may flow out from the reforming reactor without being reformed. When it is above 100 mm, the whole reactor becomes large because the reformer itself is large, and it is inappropriate for the application for an in-car liquid reformer, which is required to be small and light. It is preferable that the length of the reformer is suitably selected within the aforementioned range.

The material for the reformer is preferably ceramic, and silicon carbide is further preferable among ceramic materials.

In addition, the reformer preferably has a porous body having a porosity of 30 to 60% and further preferably has a porous body having a porosity of 40 to 50%. When it is below 30%, the effect of minute discharge in a gap between ceramic particles may be decreased. On the other hand, when it is above 60%, a defect such as insufficient strength of partition walls may be caused. The porosity is a value measured by mercury porosimetry.

In addition, as shown in Fig. 1, it is preferable that the reformer 1 has plugging portions on one end portion of each of the predetermined cells 2 and the other end portion of each of the other cells 2 and that the predetermined cells are disposed only for one cell in the outermost periphery. It is preferable that it has plugging portions because the adiabatic effect improves. The material for the plugging portions is preferably the same as that for the partition walls of the reformer.

The liquid supply hole 6 formed in the reformer 1 in the reactor 100 of the present embodiment is formed in order to insert the liquid supply tube 11 to introduce the liquid into the reformer 1. As shown in Figs. 1 and 2, it is preferable that the liquid supply hole 6 is formed so as to have an opening portion on a side face 4 of the reformer 1 and extend through the reformer perpendicularly to the direction where the cells 2 extend. The length of the liquid supply hole 6 in the longitudinal direction is preferably 40 to 100% of the width of the honeycomb structured reformer 1. When it is below 40%, since the range where the liquid is supplied is narrow, the amount of reforming the liquid may be small. Here, the "width of the reformer" means a distance from the position where an opening portion of the liquid supply hole is formed to the position where the end of the liquid supply hole crosses a side face of the reformer when the end of the liquid supply hole is extended in the longitudinal direction. Though the shape of a cross section perpendicular to the longitudinal direction of the liquid supply hole 6 is preferably a circle, it may be a polygon such as a triangle and a quadrangle, an ellipse, or the like. In addition, the size of the cross section perpendicular to the longitudinal direction of the liquid support hole 6 is preferably 1 to 4 mm, more preferably 2 to 3 mm, in diameter when the shape of the cross section is a circle. When it is below 1 mm, the supply amount of the liquid may be small, while, when it is above 4 mm, internal pressure is hardly applied to the liquid to easily cause dripping.

It is preferable that the position for forming the liquid supply hole on a side face 4 of the reformer 1 is the position of 20 to 30% of the whole length in the cell extension direction from the end face where the carrier gas flows in and the position of 50%±1% of the length in the direction perpendicular to the cell extension direction. The "face where the carrier gas flows in" will be described later in "3. method for using reactor".

In addition, the diameter of the cross section perpendicular to the longitudinal direction of the liquid supply hole 6 should be larger than the diameter of a cross section perpendicular to the longitudinal direction of the liquid supply tube 11, and the difference is preferably 3 to 15 mm, more preferably 5 to 10 mm. When it is below 3 mm, upon supplying the liquid to the inside of the reformer through the liquid supply tube 11, the liquid may hardly spread in the reformer. When it is above 15 mm, the reformer area becomes small, and the reformulation amount may be decreased.

In the reactor 100 of the present embodiment, the heating apparatus 21 is constituted of a planar heater 22 and a power source 23 for the heater. The heating apparatus 21 heats the reformer 1 by the heat generation of the planar heater 22. The heater 22 is not limited to be planar and may be band shaped and wound around the reformer. The material is preferably an insulating one, which is power saving and has high output (temperature is highly raised). The power source 23 for heating may be a direct current or an alternate current, and, it is preferable to use a direct current stabilization power source when it is a direct current and a transformer or a variable transformer when it is an alternate current. It is more preferable to use an alternate current power source without polarity. The planar heater 22 is disposed on a side face 4 of the reformer 1. The area of the heater 22 is preferably 80 to100%, more preferably 90 to 100%, of the whole area of the upper face of the reformer 1. When it is below 80%, it may be difficult to sufficiently heat the reformer. When it is above 100%, it may hit the reformer-supporting member. When the reformer is rectangular parallelepiped, as shown in Fig. 1, it is preferable that the heater 22 is disposed on the upper face parallel to the direction where the liquid supply hole 6 extends. In addition, in the reactor 100 shown in Fig. 1, there is only one heater 22. However, it is preferable that another heater is further disposed on the lower face parallel to the upper face where the heater 22 shown in Fig. 1 is disposed. In addition, another heater may be disposed on another side face. In addition, the heater 22 generates heat within the range of preferably 750 to 950°C, more preferably 800 to 900°C. When it is below 750°C, the liquid is hardly evaporated, and the reforming reaction may hardly be caused. When it is above 950°C, breakage of the heater is easily caused, and the life may become short.

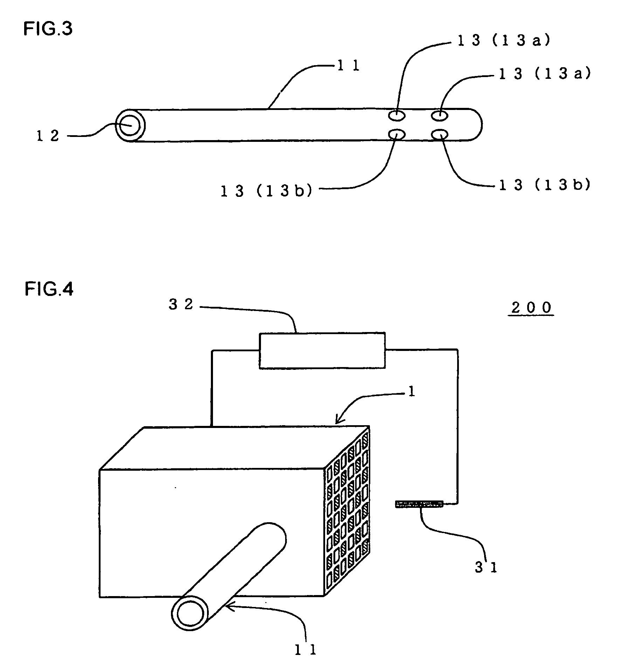

In the reactor 100 of the present embodiment, though the shape of the liquid supply tube 11 is preferably a circular cylinder having a hollow portion 12 for circulating the liquid as shown in Fig. 3, it may be a parallelepiped having a polygonal bottom face, a cylinder having an elliptic bottom face, or the like. Though the length of the liquid supply tube 11 is not particularly limited as long as it can supply the liquid to the inside of the reformer with being inserted into the liquid supply hole, it is preferable that the liquid supply tube 11 protrudes from the opening portion of the liquid supply hole by 40 to 50 mm when the liquid supply tube 11 is inserted into the liquid supply hole up to a desired position. When the liquid supply tube 11 has a circular cylindrical shape, the diameter (outer diameter) of the cross section perpendicular to the longitudinal direction is preferably 6 to 8 mm. The inner diameter (diameter of the hole) in the cross section perpendicular to the longitudinal direction of the liquid supply tube 11 is preferably 2 to 4 mm, more preferably 2.9 to 3.1 mm. In addition, the thickness of the wall of the liquid supply tube 11 is preferably 1.6 to 3 mm, more preferably 1.9 to 2.1 mm. When it is thinner than 1.6 mm, strength of the liquid supply tube 11 may be decreased. Fig. 3 is a perspective view schematically shown the liquid supply tube 11 constituting one embodiment of a reactor of the present invention.

In addition, as shown in Fig. 3, the liquid supply tube 11 preferably has a liquid injection port 13 communicating with the hollow portion 12 within the range where the tube 11 is inserted in the liquid supply hole. It is preferable that a plurality of liquid injection ports 13 are formed and that they are formed to align in the central axial direction. In addition, as shown in Fig. 3, in addition to the two liquid injection ports 13a, 13a aligned in the central axial direction, it is further preferable that two other liquid injection ports 13b, 13b aligned in the central axial direction are formed. In this case, there are four liquid injection ports in total. Thus, when liquid injection ports are formed in two rows in the central axial direction, in the positional relation of the two rows of liquid injection ports, the angle formed by the "liquid injection port 13a on one side", the "center (center of the liquid supply tube)", and the "liquid injection port 13b on the other side" is preferably 30 to 120°, more preferably 60 to 90° in a cross section perpendicular to the central axial direction. When the angle is below 30°, the liquid concentrates only in the central portion of the reformer, which may make evaporation difficult. When it is above 120°, the liquid concentrates in both the ends of the reformer, which may decrease the reformulation amount.

In addition, when two liquid injection ports are aligned in the central axial direction, the distance is preferably 10 to 20 mm, more preferably 14 to 16 mm. In addition, the distance from the end portion on the side where the tube is inserted into the liquid supply hole to the first liquid injection hole is preferably 5 to 10 mm, more preferably 6.5 to 7.5 mm.

The diameter of the liquid injection port is preferably 1 to 3 mm, more preferably 1.9 to 2.1 mm. When it is smaller than 1 mm, it may become difficult to sufficiently supply the liquid, while, when it is larger than 3mm, dripping of the liquid may be caused.

The material for the liquid supply tube 11 is preferably alumina or zirconia because of its excellent thermal resistance and corrosion resistance.

In the reactor 100 of the present embodiment, it is preferable that a liquid-reforming catalyst is loaded on the reformer. By loading the catalyst, reformulation of the liquid can be accelerated. There is no limitation on the catalyst as long as the material can accelerate reformulation of the liquid. Examples of the catalyst include materials containing at least one element selected from the group consisting of noble metals, aluminum, nickel, zirconium, titanate, cerium, cobalt, manganese, zinc, copper, tin, iron, niobium, magnesium, lanthanum, samarium, bismuth, and barium. The aforementioned noble metal is preferably at least one element selected from the group consisting of platinum, rhodium, palladium, ruthenium, indium, silver, and gold. The substances containing the aforementioned element include various forms of metal simple substances, metal oxides, and other compounds (chlorides, sulfates, and the like). These substances may be used alone or as a combination of two or more kinds.

The catalyst is preferably loaded on the partition walls of the reformer. By loading the catalyst inside the cells of the reformer where the evaporated liquid passes, improvement in the reaction efficiency can be tried. In addition, unlike the packed-bed system, where a particle-shaped catalyst is filled, the passage of the evaporated liquid is hardly hindered since the cells functioning as gas passages are secured. In addition, since a catalyst component is loaded on the reformer as a substrate, it has good heat transfer in the catalyst.

As the amount of loaded catalyst is preferably 0.05 to 70 [g (catalyst mass) / L (reformer volume)], more preferably 0.1 to 40 g/L. When the amount is below 0.05 g/L, the catalyst function may hardly be exhibited. On the other hand, when it is above 70 g/L, the production costs for the reactor may increase.

The catalyst is preferably loaded on the partition walls of the reformer in the state of a catalyst-coated microparticle loaded on a carrier microparticle. Such a form has the advantage of improving the reaction efficiency with respect to a liquid catalyst. As the carrier microparticle, there can be used, for example, a ceramic powder. There is no particular limitation on the kind of the ceramic, and there can suitably be used a powder of, for example, metal oxides, in particular, silica, alumina, titania, zirconia, ceria, zeolite, mordenite, silica alumina, metal silicate, cordierite, or the like. These ceramic materials may be used alone or as a combination of two or more kinds. Such a catalyst-coated microparticle can be loaded by coating it on the partition walls of the reformer.

The average particle diameter of the aforementioned carrier microparticle is preferably 0.01 to 50 µm, more preferably 0.1 to 20 µm. When the average particle diameter is below 0.01 µm, the catalyst may hardly be loaded on the surface of the carrier microparticle. On the other side, when it is above 50 µm, the catalyst-coated microparticle may easily be peeled off.

The mass ratio of the catalyst to the carrier microparticle is preferably 0.1 to 20 mass%, more preferably 1 to 10 mass%. When the mass ratio of the catalyst is below 0.1 mass%, the reforming reaction may hardly proceed. On the other hand, when it is above 20 mass%, since the catalyst easily agglutinates without being uniformly dispersed, the catalyst may hardly be loaded uniformly on the carrier microparticle. Therefore, even if the catalyst at an amount exceeding 20 mass% is added, the catalyst addition effect corresponding with the amount cannot be obtained, and there is a case that the reforming reaction is not accelerated.

The catalyst-coated microparticle can be obtained by, for example, impregnating a ceramic powder to serve as a carrier microparticle with an aqueous solution containing a catalyst component, followed by drying and firing. To the catalyst-coated microparticles are added a dispersion medium (water or the like) and other additives to prepare coating liquid (slurry), and the slurry is coated on the partition walls of the reformer to load the catalyst on the partition walls of the reformer.

Next, another embodiment of a reactor of the present invention will be described. As shown in Fig. 4, the reactor 200 of the present embodiment is provided with a honeycomb structured reformer 1, a liquid supply tube 11, and a heating apparatus 21. The heating apparatus 21 has a linear electrode 31 disposed on an extended line of the direction where the cells of the reformer 1 extend and a pulse power source 32 capable of applying pulse voltage to a pair of electrodes with the reformer and the linear electrode being regarded as the pair of electrodes. By employing conductive ceramic as the material for the reformer 1 and by generating plasma by applying pulse voltage from the pulse power source 32 between a pair of electrodes with the linear electrode 31 and the reformer 1 being a pair of electrode, the reformer 1 is heated to accelerate the evaporation and reforming reaction of the liquid. In the reactor of the present embodiment, the characteristics of the reformer 1 and the liquid supply tube 11 are the same as the characteristics of the reformer 1 and the liquid supply tube 11 in the aforementioned one embodiment of a reactor of the present invention. Incidentally, in the reformer, the constitution suitable for generating plasma will further be described below. In addition, in a reactor of the present embodiment, the characteristics of the catalyst loaded are the same as the characteristics of the catalyst in the aforementioned one embodiment of a reactor of the present invention. In a reactor of the present embodiment, though the reformer is heated by the use of the linear electrode and the pulse power source as the heating apparatus, since the reformer to be heated is also used as one of the electrodes where pulse voltage is applied, the reformer, also, can be considered as a part of the heating apparatus. Fig. 4 is a perspective view schematically showing another embodiment of a reactor of the present invention.

Since the reactor 200 of the present embodiment generates plasma by applying pulse voltage between the reformer of conductive ceramic and the linear electrode, the reformer is heated by the generation of plasma, and the reformulation of the liquid is accelerated by the plasma. By this, when a liquid is supplied to the reformer, the liquid is evaporated in the reformer, and the evaporated liquid is reformed.

In the reactor 200 of the present embodiment, silicon carbide is suitable as the conductive ceramic, which is the material for the reformer 1. However, it is not always necessary for the whole reformer 1 to be constituted of silicon carbide as long as the reformer 1 has conductivity. That is, it is preferable that the reformer 1 is made of conductive ceramic containing silicon carbide. In this case, the content rate of silicon carbide in the reformer 1 is preferably 50 mass% or more, more preferably 60 mass% or more from the reason of suppressing deterioration in conductivity.

When the reactor 200 of the present embodiment is used for hydrogen formation by reforming of hydrocarbon, the reformer 1 has a cell density of preferably 25 to 1163 cells/sq.in. (4 to 186 cells/cm²). When the cell density is below 4 cells/cm², the generation region of plasma performing creeping discharge becomes sparse on a surface of the partition walls of each cell, and the liquid-reforming efficiency may decrease. When it is above 186 cells/cm², back pressure resistance may increase.

In the reformer 1, from the viewpoint of securing conductivity, the electric resistance is preferably 2Ω or less, more preferably 0.3Ω or less upon applying a voltage of 3.5V at 180°C. To obtain such an electric resistance, it is preferable to use silicon carbide as conductive ceramic and to subject it to a treatment of mixing metal silicon, compounding metal silicon with silicon carbide, or the like.

Incidentally, the "electric resistance" here means a value obtained by measuring (180°C) a rectangular parallelepiped having a length of 3.3 cm and a cross-sectional area of 1.1 cm² (cross-sectional area of a cross section perpendicular to the cell extension direction) obtained by cutting the reformer 1 along the cell extension direction of the reformer 1 with a voltage terminal distance of 2.3 cm in a constant current 4-terminal method using a direct-current power source.

The reformer 1 has a thermal conductivity of preferably 5 to 300 W/mK, more preferably 10 to 200 W/mK, particularly preferably 20 to 100 W/mK from the viewpoint of activation of the loaded catalyst. When the thermal conductivity is below 5 W/mK, much time may be spent for the activation of the loaded catalyst. When it is above 300 W/mK, heat release to the outside increases, and the loaded catalyst may insufficiently be activated. Examples of the conductive ceramics having such a thermal conductivity include silicon carbide, silicon nitride, and aluminum nitride.

The reformer is disposed in such a manner that the interelectrode distance from the linear electrode 31 is preferably 1 to 30 mm, more preferably 5 to 10 mm. When the interelectrode distance is below 1 mm, electric field concentration is easily caused, and short-circuiting may easily be caused with the concentration being the starting point. In addition, though plasma discharge is caused between the electrodes, the hydrogen generation amount according to the reforming reaction of hydrocarbon may be decreased. On the other hand, when it is above 30 mm, plasma discharge is hardly stabilized, and the plasma generation efficiency may be decreased.

In the reactor 200 of the present embodiment, the linear electrode 31 is preferably a stick-shaped or needle-shaped electrode. The "stick-shape" means a linear circular column, and the "needle-shape" means a shape having a pointed tip portion in the aforementioned "stick-shape". However, the shape of the linear electrode is not necessarily limited to a linear shape as in the stick-shaped electrode or the needle-shaped electrode. For example, it may be a bent shape including an L shape. The number of the linear electrode may one or a plurality. In addition, the linear electrode 31 is preferably disposed in such a manner that the central axial direction (longitudinal direction) is parallel to the cell extension direction of the reformer. In addition, when the linear electrode has a bent shape, it is preferably disposed in such a manner that the linear portion including the tip portion toward the reformer side among the linear portions formed by the bending is parallel to the cell extension direction of the reformer.

The length of the linear electrode is preferably 3 to 50 mm, more preferably 5 to 30 mm from the reason of reducing the size of the reactor. When the length is below 3 mm, handling of the linear electrode is unstable upon manufacturing the reactor, and fixation of the linear electrode may be difficult. On the other hand, when it is above 50 mm, the linear electrode may easily be bent by the contact with the circulation gas circulating in the reformer.

In addition, the linear electrode has an outer diameter of preferably 0.1 to 5 mm, more preferably 0.5 to 3 mm. When the outer diameter is below 0.1 mm, the linear electrode is easily bent by the contact with the circulation gas circulating in the reformer, and plasma discharge may become unstable. On the other hand, when it is above 5 mm, it may become difficult to control plasma discharge.

The linear electrode is preferably constituted of a material having high conductivity, specifically, metals, alloys, conductive ceramics, etc., from the viewpoint of securing conductivity. Examples of metals having high conductivity include nickel, copper, aluminum, and iron. In addition, examples of alloys having high conductivity include aluminum-copper alloy, titanium alloy, stainless steel, and Inconel (trade name). Examples of the conductive ceramics include silicon carbide. Examples of other materials include carbon.

In the reactor 200 of the present embodiment, the pulse power source 32 is a power source for applying pulse voltage to a pair of electrodes. Though any power source can be employed as long as voltage can be applied periodically, it is preferably a power source capable of supplying (a) a pulse waveform having a peak voltage of 1 kV or more and a pulse number of 1 or more per 1 second, (b) an alternating-current voltage waveform having a peak voltage of 1 kV or more and a frequency of 1 Hz or more, (c) a direct-current waveform having a voltage of 1 kV or more, or (d) a voltage waveform obtained by superimposing any of these waveforms. The power source has a peak voltage of preferably 1 to 20 kV, and it is more preferable to employ a power source having a peak voltage of 5 to 10 kV. Examples of such a power source include a high-voltage pulse power source (produced by NGK, Insulators, Ltd.) using a static induction thyristor (SI thyristor).

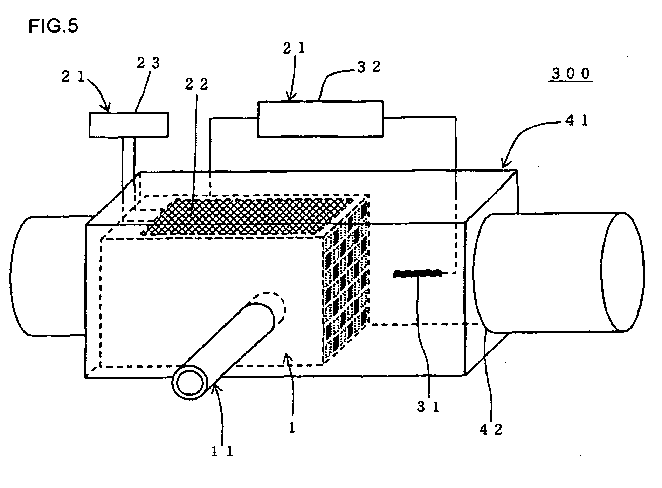

As shown in Fig. 5, still another embodiment of a reactor of the present invention has a reformer 1 therein and is provided with a reforming reactor 41, which is a tubular structure having a circulation gas introduction port 42 and discharge port for the circulation gas containing reformed gas. Though it is necessary that the reforming reactor 41 has a hollow shape because of necessity of passing the gas, there is no other limitations regarding the shape, and, a structure having, for example, a cylindrical shape or a parallelepiped shape may be employed. The maximum inner diameter of the reforming reactor is not particularly limited, and the size may suitably be determined according to the intended use of the reactor. Fig. 5 is a perspective view schematically showing still another embodiment of a reactor of the present invention.

As shown in Fig. 5, the reformer 1 is preferably disposed in the reforming reactor 41 in such a manner that the two end faces where cells are open face the circulation gas inlet port 52 side and the circulation gas discharge port. In addition, in order to allow all the circulation gas flowing in from the circulation gas introduction port 42 of the reforming reactor 41 to flow into the cells, it is preferable to seal the gap between the reforming reactor 41 and the reformer 1 by a canning method (holding member: non-expansion mat produced by Mitsubishi Plastics, Inc.).

Though the material for the reforming reactor is not particularly limited, a container portion is preferably constituted of metal having good processability (e.g., stainless steel). In addition, when plasma is generated, a portion for arranging the reactor in the container and the like is preferably constituted of an "insulating material" from the viewpoint of inhibiting short-circuiting.

As the "insulating material", a ceramic material can suitably be used. As the ceramic material, it is preferable to use alumina, zirconia, silicon nitride, aluminum nitride, sialon, mullite, silica, cordierite, or the like. These ceramic materials may be used alone or as a combination of two or more kinds.

In the reactor 300 of the present embodiment, the characteristics of the reactor 1 and the liquid supply tube 11 are the same as the characteristics of the reactor 1 and the liquid supply tube 11 in the aforementioned one embodiment of a reactor of the present invention. Incidentally, regarding the reformer, the constitution suitable for generating plasma is the same as in the reactor 1 in another embodiment of a reactor of the present invention. In addition, in a reactor of the present embodiment, the characteristics of the catalyst to be loaded are the same as the characteristics of the catalyst in the aforementioned one embodiment of a reactor of the present invention. In addition, in a reactor of the present embodiment, as the heating apparatus, both the heating apparatus using a heater and the heating apparatus using a pulse power source and a linear electrode are used. The characteristics of the heating apparatus using a heater are the same as the characteristics of the heating apparatus using a heater in the aforementioned one embodiment of a reactor of the present invention. In addition, the characteristics using a pulse power source and a linear electrode are the same as the characteristics of the heating apparatus using a pulse power source and a linear electrode in the aforementioned another embodiment of a reactor of the present invention.

It is preferable that, as shown in Fig. 5, a reactor of the present invention employs both the heating apparatus 21 using a heater 22 and the heating apparatus 21 using a pulse power source 32 and a linear electrode 31 because evaporation of the liquid and reformulation of the evaporated liquid can effectively be performed.

### 2. Method for manufacturing reactor:

Next, a method for manufacturing a reactor of the present invention will be described. The reformer can be manufactured by a known extrusion-forming method. Specifically, kneaded clay containing a ceramic powder is subjected to extrusion forming to manufacture a desired honeycomb formed article, and the honeycomb formed article is subjected to a hole-making process to form a liquid supply hole, followed by drying and firing to obtain a honeycomb structured reformer. As the ceramic powder, it is preferable to use the ceramic powder mentioned as the preferable material for the reformer in the aforementioned one embodiment or another embodiment of a reactor of the present invention. In addition, plugging portions are preferably formed in predetermined portions on both the end faces where cells are open of the reformer. Though there is no particular limitation on the method for forming the plugging portions, an example is the following method. After a sheet is attached to one end face (end face on one side where cells are open) on one side of a fired reformer, holes are made in portions corresponding with the cells (first cells) where the plugging portions are to be formed of the sheet. Then, the end face having the sheet attached thereto of the fired reformer is immersed in plugging slurry obtained by slurrying a constituent material for the plugging portions to fill the plugging slurry into the opening end portions of the cells (first cells) where the plugging portions are to be formed through the holes made in the sheet. Regarding the other end face (end face on the other side where cells are open) of the honeycomb fired article, plugging portions are formed (plugging slurry is filled) in the cells (second cells) each not having the plugging portion on an end face on the one side in the same manner as in the method of forming plugging portions on the end face on the one side. As the constituent material for the plugging portions, the same material as that for the honeycomb formed article is preferably used. It is preferable to perform firing under the same conditions as the aforementioned conditions after the plugging portions are formed. In addition, the plugging portions may be formed before firing the honeycomb formed article.

The liquid supply tube can be obtained by manufacturing a desired tubular formed article by subjecting kneaded clay containing a ceramic powder to extrusion forming and a liquid injection port is formed in the tubular formed article, followed by drying and firing. As the ceramic powder used for manufacturing of the liquid supply tube, it is preferable to use the ceramic powder mentioned as the preferable material for the liquid supply tube in the aforementioned one embodiment of a reactor of the present invention. The liquid injection port may be formed after firing the aforementioned tubular forming article.

It is preferable to form the reforming reactor by processing a metal into a desired shape in that metal can easily be processed. In the case of generating plasma using a linear electrode and a pulse power source as the heating apparatus, it is preferable that alumina or the like as the insulating material is disposed inside the reforming reactor and that the reformer is disposed on the insulating material. In addition, in the case of generating plasma in the reforming reactor, the reforming reactor itself may be formed by forming the insulating material. When the reforming reactor is manufactured by forming alumina or the like as the insulating material, it is preferable to obtain a tubular (cylindrical) reforming reactor by subjecting kneaded clay containing a ceramic powder to extrusion into a desired shape, followed by drying and firing.

Next, it is preferable to load a catalyst on the partition walls of the reformer. After the ceramic powder serving as a carrier microparticle is impregnated with an aqueous solution containing a catalyst component in advance, drying and firing are performed to obtain a catalyst-coated microparticle. To the catalyst-coated microparticle are added a dispersion medium (water or the like) and other additives to prepare coating liquid (slurry), and the slurry is coated on the partition walls of the reformer, followed by drying and firing to load the catalyst on the partition walls of the reformer.

The thus obtained reformer is placed in the inner space of the reforming reactor, and the liquid supply tube is connected with the reformer. When the heater is used as the heating apparatus, a predetermined heater is disposed on a side face of the reactor and electrically connected with the power source for the heater to obtain a reactor. In addition, when the pulse power source and the linear electrode are used as the heating apparatus, the linear electrode is disposed apart from the reformer at a predetermined distance on the extension of the cell extending direction. Then, the honeycomb electrode and the linear electrode are electrically connected with the pulse power source to obtain a reactor. At this time, the linear electrode is preferably disposed in such a manner that the longitudinal direction is parallel to the cell extension direction.

### 3. Method for using reactor:

A reactor of the present invention can suitably be used for a reforming reaction, in particular, the reforming reaction for obtaining hydrogen-containing reformed gas from a liquid containing a hydrocarbon based compound or an alcohol.

Examples of the "hydrocarbon based compound include light hydrocarbons such as methane, propane, butane, heptane, and hexane and petroleum hydrocarbons such as isooctane, pentadecane, gasoline, kerosene, and naphtha. Examples of the "alcohol" include methanol, ethanol, 1-propanol, 2-propanol, and 1-butanol. The liquid may contain one of these hydrocarbon components and alcohols or a combination thereof. It is also possible that the liquid is constituted of only the hydrocarbon compounds or the alcohols, and, in that case, only one kind out of the hydrocarbon compounds or the alcohols may be used alone, or two or more kinds may be mixed together.

There is no particular limitation on the reforming method. The reforming method can be used in any of the partial reformulation using oxygen, steam reformulation using water, auto thermal using oxygen and water, and the like.

In the case of performing a reforming reaction using a reactor of the present invention, carrier gas is introduced from an end face on one side of the end faces where cells are open of the reformer and allowed to pass through the cells and disposed from the end face on the other side. At this time, the end face where the carrier gas is introduced is the "face on the side where the carrier gas flows in". As the carrier gas, it is preferable to use nitrogen gas, argon gas, or the like. In the case of performing a partial reformulation, it is preferable to allow oxygen to be contained in the carrier gas at a predetermined rate. When steam reformulation is performed, it is preferable to allow water to be contained in the carrier gas. Then, the reformer is heated at a predetermined temperature with a heating apparatus. The temperature of the reformer is preferably 600 to 700°C for the partial reformation or 400 to 600°C for the steam reformation. With sending the aforementioned carrier gas, the liquid is supplied to the inside of the reformer with the liquid supply tube. The liquid supplied to the inside of the heated reformer is evaporated, and the evaporated liquid is reformed in the reformer to become reformed gas containing hydrogen. The reformed gas means a mixture of hydrogen and another compound obtained by reformulation of liquid. Then, the reformed gas is discharged from the end face on the other side of the reformer together with carrier gas.

When a linear electrode and a pulse electrode are used as the heating apparatus, it is preferable to apply pulse voltage having a voltage waveform selected from (a) a pulse waveform having a peak voltage of 1 kV or more and a pulse number of 1 or more per 1 second, (b) an alternating-current voltage waveform having a peak voltage of 1 kV or more and a frequency of 1 Hz or more, (c) a direct-current waveform having a voltage of 1 kV or more, and (d) a voltage waveform obtained by superimposing any of these waveform.

### Example

Hereinbelow, the present invention will be described specifically on the basis of Examples. However, the present invention is by no means limited to these Examples. In addition, measurement of each property was according to the method described below.

### (Example 1)

A reactor as shown in Fig. 5 was manufactured. As the reformer, a honeycomb structure made of silicon carbide (SiC) (silicon carbide honeycomb structure) was used. As the silicon carbide honeycomb structure, an article obtained by cutting a 33 mm cube silicon carbide DPF (diesel particulate filter) (produced by NGK Insulators, Ltd., with the end faces having a side length of 33 mm) into a rectangular parallelepiped shape having a vertical size of 20 mm and a horizontal size of 29 mm with a length of 40 mm. Incidentally, the 33 mm cube silicon carbide DPF is manufactured on mass production lines as a 33 mm cube segment. Here, the "length" means the length in the cell extension direction, the "horizontal size" means a length in the direction where the liquid supply hole extends, and the "vertical size" means a length in the direction perpendicular to the directions for the "length" and the "horizontal size". Then, plugging portions were formed in the first cells in the outermost periphery of each of the end faces. A liquid supply hole having a diameter of 15 mm and a depth of 26 mm was formed on a side face of the honeycomb structure. The position where the liquid supply hole was formed on the side face was the position of 1/3 of the whole length in the cell extension direction from the face where the carrier gas flows in and the position of 1/2 of the whole length in the direction perpendicular to the cell extension direction.

A catalyst was loaded on the reformer. The method for loading the catalyst was as follows. In the first place, a finely-powdered alumina (specific surface area of 107 m²/g) was impregnated with a nickel nitrate (Ni(NO₃)₂) solution, followed by drying at 120°C and firing at 550°C for 3 hours in the atmosphere to obtain a nickel/alumina powder containing 20 mass% of nickel (Ni) with respect to alumina. After alumina sol and water were added to the nickel/alumina powder, the pH was adjusted to be 4 with a nitric acid solution to obtain slurry. A reformer was immersed in the slurry and dried at 120°C, followed by firing at 550°C for one hour in a nitrogen atmosphere to manufacture a reformer having a catalyst loaded thereon. At this time, the amount of nickel loaded on the reformer was 50 (g/L).

The liquid supply tube was manufactured by subjecting a forming raw material containing an alumina powder to extrusion forming into a cylindrical shape, followed by drying, firing, and forming a liquid injection port (alumina purity of 96%). In the liquid supply tube, an opening portion in an end portion on one side was closed with Aron Ceramic D (produced by Toagosei, Co., Ltd.). The liquid supply tube obtained above had an outer diameter of 7.2 mm and an inner diameter of 3.0 mm. The liquid injection ports were formed in the positions of 7 mm and 17 mm from the closed end portion, and two more liquid injection ports were formed in the positions having an angle of 90° from the aforementioned two positions. Thus, a liquid supply tube having four liquid injection ports formed thereon as shown in Fig. 3 was obtained. Here, the liquid supply tube was fixed to the liquid supply hole 6 in such a manner that the central position of the four positions having the liquid injection ports faces the direction of the reformer 1 inlet port.

A planar heater (produced by SAKAGUCHI E.H VOC CORP.) was used as a heater. As the power source for the heater, the power source attached to the planar heater was used. The planar heater had a vertical size of 25 mm, a horizontal size of 25 mm, and a thickness of 2 mm. As shown in Fig. 5, the planar heater was fixed on the reformer with being directly put thereon.

As shown in Fig. 5, as the heating apparatus, a linear electrode 31 and a pulse power source 32 were used together with a heater 22. Incidentally, since the reformer 1 functions as an electrode for generating plasma, it was made of silicon carbide, which is a conductive ceramic. As the pulse power, there was used a high voltage pulse power source using a static induction (SI) thyristor (produced by NGK Insulators, Ltd.) as a switching element. In addition, as the linear electrode, a circular columnar stainless steel electrode with a cross section perpendicular to the longitudinal direction having a diameter of 0.5 mm and a length of about 10 mm. The linear electrode was used on the positive electrode side, and the reformer was used on the negative electrode side.

A reforming reactor having the reformer disposed therein was manufactured. For the reforming reactor, a stainless steel plate having a thickness of 5 mm was processed into a rectangular parallelepiped shape (box shape) having a vertical (circulation direction of circulation gas) size of 90 mm, a horizontal size of 70 mm, and a depth of 25 m. Holes each having a diameter of 20 mm were formed in the two faces perpendicular to the fluid circulation direction, and one of the holes was determined as the circulation gas introduction port 42, and the other hole was determined as the circulation gas discharge port. An insulating plate for arranging the reformer thereon was disposed on an inner face of the reforming reactor. As the insulating plate, an alumina plate was used.

As shown in Fig. 5, a reformer 1 was disposed inside the reforming reactor 41, and a linear electrode 31 was disposed in a position 5 mm apart from the end face (end face where opening portions of cells are formed) on the circulation gas inlet side of the reformer 1, followed by electrically connecting a pulse power source to the linear electrode (positive electrode) and the reformer (negative electrode) with a conductive wire to obtain a reactor. By the use of the reactor, a hydrocarbon reformulation test was performed by the method shown below. The results are shown in Table 1. In Table 1, power consumption means the total amount of energy used in the heating apparatus and the plasma.

### (Reforming test)

Pentadecane (C₁₅H₃₂) was used as the liquid to be reformed, and pentadecane was reformed by a partial oxidation reaction to generate hydrogen and carbon monoxide. Nitrogen gas containing oxygen at 15000 ppm was allowed to flow in from the circulation gas introduction port 42 of the reforming reactor 41 as the carrier gas, and the carrier gas flowing into the reforming reactor 41 was allowed to flow in the reformer from openings of cells on an end face on one side of the reformer, passed through the cells, and discharged from the end face on the other side of the reformer. The carrier gas discharged from the reformer was discharged from the circulation gas discharge port of the reforming reactor 41. The carrier gas was heated at 350°C before it was allowed to flow into the reforming reactor. With sending the carrier gas, liquid pentadecane was supplied to the reformer 1 from the liquid supply tube 11 at a prescribed rate by the use of a high pressure microfeeder (JP-H type produced by Furue Science Co., Ltd.) to evaporate pentadecane in the reformer. By evaporating pentadecane in the reformer, the carrier gas had a composition of "pentadecane of 2000 ppm, oxygen of 15000 ppm, and nitrogen as the rest". The composition ratio was before reformulation. At this time, the space velocity (SV) of the carrier gas was 80000/hour with respect to the plasma generation space of the reformer. The hydrogen content in the carrier gas discharged from the circulation gas discharge port of the reforming reactor 41 was measured with a gas chromatography (GC3200 produced by GL Science Inc., using argon gas as the carrier gas) provided with a TCD (thermal conductivity detector) to calculate ahydrogenproduction rate. The hydrogen production rate was calculated by dividing the pentadecane amount converted from the hydrogen content measured above in the carrier gas by the amount of pentadecane supplied to the carrier gas and multiplying the value by 100. Incidentally, as conditions for the pulse power source for generating plasma, a repetition cycle was 3 kHz, and a peak voltage of 3 kV was applied between the electrodes. The planar heater disposed in the reformer was heated for temperature adjustment to adjust the temperature of the carrier gas discharged from the reformer to be 350°C.

**Table 1**

| | Example 1 | Comp. Ex. 1 |
|---|---|---|
| Hydrogen production rate (%) | 50 | 45 |
| Power consumption (W) | 150 | 280 |

### (Comparative Example 1)

A reactor was manufactured in the same manner as in Example 1 except that linear electrodes were manufactured in place of the reformer to reform pentadecane by the use of two linear electrodes as a pair of plasma generation electrodes. The distance between the electrodes was 5 mm. The reforming test was performed in the same manner as in Example 1. Incidentally, the liquid pentadecane was heated and evaporated with a planar heater just before the circulation gas inlet port.

From Table 1, it can be understood that the reactor in Example 1 can achieve high hydrogen production rate with low power consumption in comparison with the reactor in Comparative Example 1.

A reactor of the present invention can suitably be used as an apparatus for generating hydrogen by reforming a liquid.

## Claims

1. A reactor comprising:
a honeycomb-structure reformer (1) having partition walls (3) separating and forming a plurality of cells (2) functioning as fluid passages extending through from one end face to another end face and a side face which extends from said one end face to the other end face, and further having a liquid supply hole (6) having an opening at said side face, the reformer (1) being capable of evaporating liquid supplied inside, and capable of reforming the evaporated liquid;
a liquid supply tube (11) inserted into the liquid supply hole (6) in order to supply liquid to the cells (2) inside the reformer (1); and
a heating apparatus (21) for heating the reformer (1).

2. A reactor according to claim 1, wherein the liquid contains hydrocarbon.

3. A reactor according to claim 1 or 2, wherein the heating apparatus (21) has a heater (22) disposed on the side face of the reformer (1), and the reformer (1) is heated by the heater (22) to accelerate the evaporation and reforming reaction of the liquid.

4. A reactor according to any one of claims 1 to 3, wherein a material for the reformer (1) is conductive ceramic, and the heating apparatus (21) has a linear electrode (31) disposed on an extended line of the direction where the cells (2) of the reformer (1) are extended and a pulse power source (32) capable of applying pulse voltage to a pair of electrodes with the reformer (1) and the linear electrode (31) being regarded as the pair of electrodes,
wherein pulse voltage is applied between the pair of electrodes to generate plasma, and thereby the reactor (1) is heated to accelerate evaporation and reforming reaction of the liquid.

5. A reactor according to claim 4, wherein the conductive ceramic contains silicon carbide.

6. A reactor according to any one of claims 1 to 5, wherein a catalyst for reforming is loaded on the reformer (1).

7. A reactor according to claim 6, wherein the catalyst is a substance containing at least one element selected from the group consisting of noble metals, aluminum, nickel, zirconium, titanium, cerium, cobalt, manganese, zinc, copper, tin, iron, niobium, magnesium, lanthanum, samarium, bismuth, and barium.

8. A reactor according to claim 6, wherein the catalyst is a substance containing at least one element selected from the group consisting of platinum, rhodium, palladium, ruthenium, indium, silver, and gold.

9. A reactor according to any one of claims 4 to 8, wherein the pulse power source (32) is a high voltage pulse power source using a static induction thyristor.

## Patentansprüche

1. Reaktor, umfassend:
einen Reformer (1) mit Wabenstruktur, der Trennwände (3) aufweist, die eine Vielzahl von Zellen (2) trennen und ausbilden, die als Fluiddurchlässe fungieren, die sich von einer Endfläche zu einer anderen Endfläche erstrecken, und eine Seitenfläche aufweist, die sich von der einen Endfläche zur anderen Endfläche erstreckt, und der ferner ein Flüssigkeitszufuhrloch (6) mit einer Öffnung auf der Seitenfläche aufweist, wobei der Reformer (1) in der Lage ist, eine innen zugeführte Flüssigkeit abzudampfen und die abgedampfte Flüssigkeit zu reformieren;
einen Flüssigkeitszufuhrschlauch (11), der in das Flüssigkeitszufuhrloch (6) eingeführt ist, um den Zellen (2) innerhalb des Reformers (1) Flüssigkeit zuzuführen; und
eine Heizvorrichtung (21) zum Erhitzen des Reformers (1).

2. Reaktor nach Anspruch 1, worin die Flüssigkeit Kohlenwasserstoff enthält.

3. Reaktor nach Anspruch 1 oder 2, worin die Heizvorrichtung (21) ein Heizgerät (22) aufweist, das auf der Seitenfläche des Reformers (1) angeordnet ist und der Reformer (1) vom Heizgerät (22) erhitzt wird, um die Abdampf- und Reformreaktion der Flüssigkeit zu beschleunigen.

4. Reaktor nach einem der Ansprüche 1 bis 3, worin ein Material für den Reformer (1) ein leitfähiges Keramikmaterial ist und die Heizvorrichtung (21) eine lineare Elektrode (31) aufweist, die auf einer verlängerten Geraden in der Richtung angeordnet ist, in die sich die Zellen (2) des Reformers (1) erstrecken, und worin eine Pulsenergiequelle (32) in der Lage ist, eine Pulsspannung an ein Elektrodenpaar anzulegen, wobei der Reformer (1) und die lineare Elektrode (31) als das Elektrodenpaar anzusehen sind,
worin die Pulsspannung zwischen dem Elektrodenpaar angelegt ist, um Plasma zu erzeugen, wodurch der Reaktor (1) erhitzt wird, um die Abdampf- und Reformreaktion der Flüssigkeit zu beschleunigen.

5. Reaktor nach Anspruch 4, worin das leitfähige Keramikmaterial Silikoncarbid enthält.

6. Reaktor nach einem der Ansprüche 1 bis 5, worin ein Katalysator zum Reformieren auf dem Reformer (1) geladen ist.

7. Reaktor nach Anspruch 6, worin der Katalysator eine Substanz ist, die mindestens ein Element ausgewählt aus der Gruppe bestehend aus Edelmetallen, Aluminium, Nickel, Zirkonium, Titan, Cerium, Kobalt, Mangan, Zink, Kupfer, Zinn, Eisen, Niobium, Magnesium, Lanthan, Samarium, Wismuth und Barium enthält.

8. Reaktor nach Anspruch 6, worin der Katalysator eine Substanz ist, die mindestens ein Element ausgewählt aus der Gruppe bestehend aus Platin, Rhodium, Palladium, Ruthenium, Indium, Silber und Gold enthält.

9. Reaktor nach einem der Ansprüche 4 bis 8, worin die Pulsenergiequelle (32) eine Hochspannungspulsenergiequelle mit einem statischen Induktionsthyristor ist.

## Revendications

1. Réacteur comprenant :
un reformeur à structure en nid d'abeilles (1) comportant des parois de séparation (3) séparant et formant une pluralité de cellules (2) fonctionnant en tant que passages de fluide s'étendant d'une face d'extrémité à une autre face d'extrémité et une face latérale qui s'étend de ladite une face d'extrémité à l'autre face d'extrémité, et comportant en outre un orifice de fourniture de liquide (6) comportant une ouverture au niveau de ladite face latérale, le reformeur (1) étant capable d'évaporer le fluide fourni à l'intérieur, et capable de reformer le liquide évaporé ;
un tube de fourniture de liquide (11) inséré dans l'orifice de fourniture de liquide (6) afin de fournir un liquide aux cellules (2) à l'intérieur du reformeur (1) ; et
un appareil de chauffage (21) pour chauffer le reformeur (1).

2. Réacteur selon la revendication 1, dans lequel le liquide contient un hydrocarbure.

3. Réacteur selon la revendication 1 ou 2, dans lequel l'appareil de chauffage (21) comporte un élément chauffant (22) disposé sur la face latérale du reformeur (1), et le reformeur (1) est chauffé par l'élément chauffant (22) pour accélérer la réaction d'évaporation et de reformage du liquide.

4. Réacteur selon l'une quelconque des revendications 1 à 3, dans lequel un matériau pour le reformeur (1) est une céramique conductrice, et l'appareil de chauffage (21) comporte une électrode linéaire (31) disposée sur une ligne d'extension de la direction dans laquelle les cellules (2) du reformeur (1) s'étendent et une source de puissance impulsionnelle (32) capable d'appliquer une tension impulsionnelle à une paire d'électrodes, le reformeur (1) et l'électrode linéaire (31) étant considérés comme la paire d'électrodes,
dans lequel une tension impulsionnelle est appliquée entre la paire d'électrodes pour générer un plasma, et de ce fait le réacteur (1) est chauffé pour accélérer la réaction d'évaporation et de reformage du liquide.

5. Réacteur selon la revendication 4, dans lequel la céramique conductrice contient du carbure de silicium.

6. Réacteur selon l'une quelconque des revendications 1 à 5, dans lequel un catalyseur de reformage est chargé sur le reformeur (1).

7. Réacteur selon la revendication 6, dans lequel le catalyseur est une substance contenant au moins un élément sélectionné dans le groupe consistant en des métaux nobles, de l'aluminium, du nickel, du zircone, du titane, du cérium, du cobalt, du manganèse, du zinc, du cuivre, de l'étain, du fer, du niobium, du magnésium, du lanthane, du samarium, du bismuth et du baryum.

8. Réacteur selon la revendication 6, dans lequel le catalyseur est une substance contenant au moins un élément sélectionné dans le groupe consistant en le platine, le rhodium, le palladium, le ruthénium, l'indium, l'argent et l'or.

9. Réacteur selon l'une quelconque des revendications 4 à 8, dans lequel la source de puissance impulsionnelle (32) est une source de puissance impulsionnelle haute tension utilisant un thyristor à induction statique.
